(19)

**Europäisches Patentamt**

**European Patent Office**

**Office européen des brevets**

(11) **EP 4 456 559 A1**

(12) **EUROPEAN PATENT APPLICATION**

(43) Date of publication:
**30.10.2024  Bulletin 2024/44**

(21) Application number: **24172060.6**

(22) Date of filing: **24.04.2024**

(51) International Patent Classification (IPC):
**H04R 1/10** *(2006.01)*      *H04R 25/00* *(2006.01)*

(52) Cooperative Patent Classification (CPC):
**H04R 1/1041;** H04R 1/1016; H04R 25/407

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023  EP 23169827**

(71) Applicant: **Oticon A/S**
**2765 Smørum (DK)**

(72) Inventors:
• **PEDERSEN, Michael Syskind**
  **2765 Smørum (DK)**
• **EKSTRAND, Amalie Sofie**
  **2200 København N (DK)**
• **CARSTENSEN, Mette**
  **2765 Smørum (DK)**

• **WESTERGREN, Nicolai**
  **2765 Smørum (DK)**
• **BHUIYAN, Tanveer**
  **2765 Smørum (DK)**
• **SREEPADARAO, Sudershan Yalgalwadi**
  **2765 Smørum (DK)**
• **FISCHER, Elvira**
  **2765 Smørum (DK)**
• **WESTERGAARD, Morten**
  **2765 Smørum (DK)**
• **GRIFUL, Sergi Rotger**
  **2765 Smørum (DK)**
• **SKOGLUND, Martin**
  **2765 Smørum (DK)**

(74) Representative: **Demant**
**Demant A/S**
**Kongebakken 9**
**2765 Smørum (DK)**

(54) **PROVIDING OPTIMAL AUDIOLOGY BASED ON USER'S LISTENING INTENT**

(57)      A method, in particular performed by at least one hearing device, a hearing device, a binaural hearing system, and a computer program are disclosed. The method comprises: detecting at least one motion signal of at least one hearing device, processing the at least one motion signal of the at least one hearing device in three individual channels representing three spatial dimensions x', y', z' of the at least one hearing device, calibrating the orientation of the three spatial dimensions x', y', z' of the at least one hearing device to a standardized orientation of the head of the user wearing the at least one hearing device, and determining the amount of motion of the at least one hearing device in at least one of the calibrated spatial dimensions x, y, z of the at least one hearing device.

**EP 4 456 559 A1**

Fig. 2

## Description

### FIELD

The present disclosure generally relates to a signal processing method performed by at least one hearing device, to a hearing device, in particular a hearing aid, to a binaural hearing system comprising a first and a second hearing device, in particular a first and a second hearing aid, and to a computer program.

### BACKGROUND

In the field of hearing devices, there is an increasing awareness towards individual adaptation of the hearing device settings in order to provide wearers with an optimum sound experience. All hearing device producers aim for providing hearing devices that are capable of taking into account the user's individual preferences so that the hearing devices can deliver a just-right sound amplification.

In particular, modern hearing aids are capable of applying directional noise reduction in terms of beamforming and spatially informed post filtering. For example, this might be helpful when the user needs to increase his or her attention to a specific talker. Based on the user's intent, the help provided by the hearing device can be adjusted to optimize to the users listening experience. However, it is currently difficult to detect where the user is paying his or her attention. Optimization may thus be insufficient and the benefit of the hearing device may not be as high as it could have been. Some user feedback is needed to use it as another dimension for providing optimal audiology for a given situation.

Against this background, it is an object of the present invention to provide a signal processing method which addresses at least some of the above-mentioned problems and improves the user experience of the hearing device user by providing optimal audiological settings. Moreover, it is an object of the present invention to provide advantageous hearing devices, binaural hearing systems, and computer programs.

### SUMMARY

According to a first aspect, the signal processing method may comprise detecting at least one motion signal of at least one hearing device. In particular, the signal processing method may comprise detecting at least movement and/or acceleration of at least one sensor comprised by the at least one hearing device. For example, the motion signal may comprise said movement and/or acceleration of said at least one sensor. A "movement" may refer to a motion of the hearing device, in particular a change of position with respect to space and time. "Acceleration" may refer to the rate of change of the velocity of the hearing device with respect to time. Acceleration may be a vector quantity having a magnitude and direction. The term "movement and/or acceleration" may include both linear and angular position, velocity and acceleration. Thus, "movement and/or acceleration" may include position, orientation as well as the first and second derivative (e.g. with respect to time) of these. The method may comprise detecting a plurality of movements and/or accelerations of the hearing device during its wearing time. For example, head movements, e.g. a nod or rotation of the head to a side, or a combination thereof, may be detected. Detections may be performed by at least one detection means, e.g. a sensor. The at least one detection means may e.g. be integrated in and/or attached to the hearing device. For example, when having an accelerometer mounted inside the hearing device, head motions relating to different listening intends may be detected.

The signal processing method may further comprise processing the at least one motion signal of the at least one hearing device in three individual channels representing three spatial dimensions x', y', z' of the at least one hearing device. In particular, the three individual channels may represent three spatial dimensions x', y', z' of the at least one sensor comprised by the at least one hearing device. For example, the at least one motion signal may comprise components in three spatial dimensions x', y', z'. For example, the signal processing method may comprise processing the at least one motion signal from said sensor in said three individual channels representing said three spatial dimensions x', y', z'. The signal processing method may comprise calibrating the orientation of the three spatial dimensions x', y', z' of the at least one hearing device to a standardized orientation of the head of the user wearing the at least one hearing device, and determining the amount of motion of the at least one hearing device in at least one of the calibrated spatial dimensions x, y, z of the at least one hearing device. In particular, the amount of motion of the at least one sensor comprised by the at least one hearing device may be determined in at least one of the calibrated spatial dimensions x, y, z. For example, in the standardized orientation, the z-axis may correspond to the gravity vector (axis of gravitation). For example, amount of motion may refer to the number of counts in each of said spatial dimensions x, y, z.

The signal processing method thus allows for taking into account the direction of the motion signal and thus drawing conclusions about the situation of the user. In particular, an absolute acceleration may be determined for each axis. Looking into data in specific axes may allow for investigating the situation of the user. In particular, focused and dynamic listening situations may be associated with specific head motion patterns that can be classified by analyzing head motion in the three calibrated spatial dimensions x, y, z.

The method according to the first aspect may be performed by at least one hearing device.

According to a second aspect, the above-mentioned object is solved by a hearing device. The hearing device may be configured to performing a method according to the first aspect. In particular, the hearing device may at least be configured to detect at least one motion signal of at least one hearing device, process the at least one motion signal of the at least one hearing device in three individual channels representing three spatial dimensions x', y', z' of the at least one hearing device, calibrate the orientation of the three spatial dimensions x', y', z' of the at least one hearing device to a standardized orientation of the head of the user wearing the at least one hearing device, and determine the amount of motion of the at least one hearing device in at least one of the calibrated spatial dimensions x, y, z of the at least one hearing device.

Alternatively, or additionally, a hearing device may comprise at least one means for performing a method according to the first aspect. In particular, the hearing device may comprise at least one means to detect at least one motion signal of at least one hearing device, process the at least one motion signal of the at least one hearing device in three individual channels representing three spatial dimensions x', y', z' of the at least one hearing device, calibrate the orientation of the three spatial dimensions x', y', z' of the at least one hearing device to a standardized orientation of the head of the user wearing the at least one hearing device, and determine the amount of motion of the at least one hearing device in at least one of the calibrated spatial dimensions x, y, z of the at least one hearing device.

A hearing device (or hearing instrument, hearing assistance device) may be or include a hearing aid, a listening device or an active ear-protection device that is adapted to improve, augment and/or protect the hearing capability of a user by receiving an acoustic signal from a user's surroundings, generating a corresponding audio signal, possibly modifying the audio signal and providing the possibly modified audio signal as an audible signal to at least one of the user's ears. 'Improving or augmenting the hearing capability of a user' may include compensating for an individual user's specific hearing loss.

A "hearing device" may further refer to a device such as a hearable, an earphone or a headset adapted to receive an audio signal electronically, possibly modifying the audio signal and providing the possibly modified audio signals as an audible signal to at least one of the user's ears. Such audible signals may be provided in the form of an acoustic signal radiated into the user's outer ear, or an acoustic signal transferred as mechanical vibrations to the user's inner ears through bone structure of the user's head and/or through parts of the middle ear of the user or electric signals transferred directly or indirectly to the cochlear nerve and/or to the auditory cortex of the user.

In particular, the method according to the first aspect may be performed by at least one hearing aid. The hearing aid device may be any type of hearing aid device including a behind-the-ear (BTE) hearing aid, an in-the-ear (ITE) hearing aid, a completely-in-canal (CIC) hearing aid, an in-the-canal (ITC) hearing aid, a receiver-in-the-ear (RITE) hearing aid. The hearing aid device may comprise a BTE part (adapted for being located behind or at an ear of a user) operationally connected to a loudspeaker (receiver) and a microphone located in an ear canal of the user.

The hearing device may be adapted to be worn in any known way. This may include i) arranging a unit of the hearing device behind the ear with a tube leading air-borne acoustic signals into the ear canal or with a receiver/loudspeaker arranged close to or in the ear canal and connected by conductive wires (or wirelessly) to the unit behind the ear, such as in a BTE type hearing aid, and/or ii) arranging the hearing device entirely or partly in the pinna and/or in the ear canal of the user such as in an ITE type hearing aid or ITC/CIC type hearing aid, or iii) arranging a unit of the hearing device attached to a fixture implanted into the skull bone such as in a Bone Anchored Hearing Aid or a Cochlear Implant, or iv) arranging a unit of the hearing device as an entirely or partly implanted unit such as in a Bone Anchored Hearing Aid or a Cochlear Implant. The hearing device may be implemented in one single unit (housing) or in a number of units individually connected to each other.

In general, a hearing device may include i) an input unit such as a microphone for receiving an acoustic signal from a user's surroundings and providing a corresponding input audio signal, and/or ii) a receiving unit for electronically receiving an input audio signal. The hearing device further includes a signal processing unit for processing the input audio signal and an output unit for providing an audible signal to the user in dependence on the processed audio signal.

The input unit may include multiple input microphones, e.g. for providing direction-dependent audio signal processing. Such directional microphone system is adapted to (relatively) enhance a target acoustic source among a multitude of acoustic sources in the user's environment and/or to attenuate other sources (e.g. noise). In one aspect, the directional system is adapted to detect (such as adaptively detect) from which direction a particular part of the microphone signal originates. This may be achieved by using conventionally known methods. The signal processing unit may include an amplifier that is adapted to apply a frequency dependent gain to the input audio signal. The signal processing unit may further be adapted to provide other relevant functionality such as compression, noise reduction, etc. The output unit may include an output transducer such as a loudspeaker/receiver for providing an air-borne acoustic signal transcutaneously or percutaneously to the skull bone or a vibrator for providing a structure-borne or liquid-borne acoustic signal. In some hearing devices, the output unit may include one or more output electrodes for providing the electric signals such as in a Cochlear Implant.

According to a third aspect, the above-mentioned object is solved by a binaural hearing system comprising a first and a second hearing device. In particular, the binaural hearing system may comprise a first and a second hearing aid. A "binaural hearing system" may refer to a system comprising two hearing devices where the devices are adapted to cooperatively provide audible signals to both of the user's ears.

The first and the second hearing device may be configured to and/or comprise at least one means for performing a method according to the first aspect. The binaural hearing system may be configured and/or comprise at least one means to detect at least one motion signal of at least one hearing device, process the at least one motion signal of the at least one hearing device in three individual channels representing three spatial dimensions x', y', z' of the at least one hearing device, calibrate the orientation of the three spatial dimensions x', y', z' of the at least one hearing device to a standardized orientation of the head of the user wearing the at least one hearing device, and determine the amount of motion of the at least one hearing device in at least one of the calibrated spatial dimensions x, y, z of the at least one hearing device.

During normal operation of the first and second hearing device in the binaural hearing system, both first and second hearing devices may be adapted to transmit information on detected first and second motion signals to the respective other hearing device so that determining a total amount of motion may depend on a combination of detected motion signals in one hearing device and information being received from the other hearing device. The method may further comprise summing or subtracting the first and the second motion signal of the first and the second hearing devices, and determining the absolute amount of motion of the first and the second hearing devices in at least one of the calibrated spatial dimensions x, y, z of at least one hearing devices.

Detecting a first and a second motion signal of a first and a second hearing device and summing or subtracting the first and the second motion signal of the first and the second hearing devices may allow for more reliably identifying scenarios the user of the binaural hearing system is confronted with. Binaural information from two hearing devices worn on each side of the head of the user may be used to increase certainty of the motion detection task and reduce the noise floor. This may be particularly relevant for subtle head gestures, which are a natural part of body language during conversation. The binaural coordination of the motion signals is a consequence of the fact that the two motion signals are highly coordinated due to being mounted along the firm head scull. The binaural information extraction may be implemented as a sum or subtraction of the motion signals in the pre-processing.

According to a fourth aspect, the above-mentioned object is solved by a computer program comprising instructions which, when executed by a device, cause the device to perform the method according to the first aspect.

The functions may be stored on or encoded as one or more instructions or code on a tangible computer-readable medium. The computer readable medium may include computer storage media adapted to store a computer program comprising program codes, which when run on a processing system causes the data processing system to perform at least some (such as a majority or all) of the steps of the method according to the first aspect.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

A data processing system comprising a processor may be adapted to execute the computer program for causing the processor to perform at least some (such as a majority or all) of the steps of the method according to the first aspect.

It has been found that with the subject-matter according to the different aspects, listening situations of a user may be identified and taken into account for advantageous signal processing. In particular, focused and dynamic listening situations may be associated with specific head motion patterns that can be classified by analyzing head motion in the three calibrated spatial dimensions x, y, z.

While some basic level of head motion is expected regardless of the intend of the user, the subject-matter according to the different aspects allows for detecting relevant motion patterns that serve as markers for the user's listening intend. The three-dimensional processing makes the method significantly more sensitive to detecting motion patterns relating to user listening intends than known algorithms such as the published algorithm called ActiGraph which detects the intensity of body motion from an accelerometer mounted on the hip or leg. While the ActiGraph algorithm is inappropriate for detecting head motion, the signal processing method according to the first aspect is specifically adapted to the specific use case of head motion. In particular, the method's sensitivity to subtle movements makes it suitable for head motion detection. The subject-matter according to the different aspects of the present disclosure thus allows the user to imperceptibly e.g. control operation, in particular signal processing, of a hearing device.

Exemplary embodiments of the first, second, third and/or fourth aspect may have one or more of the properties described below. The individual features are in each case individually applicable to the method, the hearing device, the binaural hearing system, the hearing system and the computer program. The individual features may furthermore be combined with each other.

Calibrating the orientation of the three spatial dimensions x', y', z' of the at least one hearing device to the standardized orientation of the head of the user wearing the at least one hearing device may comprise calibrating the directions of the three spatial dimensions x', y', z' such that each calibrated spatial dimension x, y, z corresponds to a standardized direction X, Y, Z relative to the standardized orientation of the head of the user. The mounting of a detection means, e.g. a sensor, inside a hearing device may be rotated relative to the directions of interest for the purpose of detecting head motion patterns. Calibrating the directions of the three spatial dimensions x', y', z' such that each calibrated spatial dimension x, y, z corresponds to a standardized direction X, Y, Z relative to the standardized orientation of the head of the user allows for aligning the directions of the individual channels into a normalized orientation, represented by an up/down direction (Z), side direction (Y), and front/back direction (X). Besides the processing in three individual channels, the orientation of the three dimensions is thus calibrated so that each dimension corresponds to a standardized direction relative to the user's head orientation. For example, the standardized direction Z may correspond to the direction of gravity.

Calibrating the orientation of the three spatial dimensions x', y', z' of the at least one hearing device to the standardized orientation of the head of the user wearing the at least one hearing device may comprise determining a rotation matrix R based on the placement angle $\theta$ of the hearing device, and applying the rotation matrix R to the three spatial dimensions x', y', z' in order to obtain the calibrated spatial dimensions x, y, z. The rotation matrix R may preferably be determined based on a placement angle $\theta$ of the at least one sensor comprised by the at least one hearing device. For example, the placement angle $\theta$ may be the angle between said sensor's z'-axis and the gravity vector.

Generally, hearing devices may be mounted in different ways, based on the shape of people's ears, speaker length, style of the hearing device, etc. The z'-axis of the hearing device, in particular a sensor comprised by the hearing device, is often not oriented along the gravity vector. Applying the rotation matrix R may allow for a mathematically rotated hearing device frame, in particular for aligning the z'-axis with the gravity vector. The rotation matrix may calibrate the spatial dimensions to the user's head orientation according to the hearing device placement angle $\theta$.

The rotation matrix R may be calculated by estimating the initial orientation of the hearing device, in particular a sensor comprised by the hearing device. Estimating the initial orientation may be performed according to Three-axis attitude determination from vector observations published in the Journal of Guidance, Control, and Dynamics by M. D. Shuster and S. D. Oh. Taking the inverse of the rotation matrix R would then enable the axis of the hearing device, in particular the sensor, to be aligned with Z-axis.

It is to be noted that applying the initial orientation does not change the norm of the acceleration, just the frame of the acceleration is rotated. In particular, the rotation matrix has no impact on the amplitude of the signal.

By applying standard linear algebra operation in terms of a rotation matrix, the original recorded motion signal may be projected onto a new vector base, representing a normalized orientation. The rotation matrix may be dependent on the placement angle $\theta$ of the hearing device. The rotation matrix may be derived for an individual user by measuring the static acceleration caused by gravity when the hearing device is placed on the ear and when it is lying flat on the side.

The rotation matrix may be extracted from an average orientation of a detection means comprised by the hearing device based on a representative group of users wearing the hearing device, or it may be calibrated to the individual hearing device user with his or her specific placement of the hearing device.

An individualized rotation matrix R may be determined by measuring movement and/or acceleration data of a hearing device worn by a hearing device user while the hearing device user is sitting still and looking to the front and calculating the rotation matrix of the hearing device based on this measured data. This may allow for an individualized rotation matrix for an individually worn hearing device. For example, the movement and/or acceleration data may be measured for a certain period of time such as e.g. 10 ms.

Alternatively, the rotation matrix R may be a standardized rotation matrix based on average data across a plurality of hearing device users. It may be assumed that the hearing device is fitted in a conventional way, e.g. like known from data of a plurality of hearing device users, e.g. 60 different hearing device users.

A different rotation matrix may be calculated for each hearing device of a binaural hearing system.

The method may further comprise low-pass filtering of the amount of motion of the at least one hearing device in at least one of the calibrated spatial dimensions x, y, z. This allows for reduced computation and memory load. The method is thus suited for processing on small devices like hearing aids. Low-pass filtering with different attack and release times offers the necessary capabilities to fine-tune the dynamic behavior of the signal processing method to enable detection of relevant head motions. In particular, low-pass filtering may comprise a 1st order IIR filter with different attack and release time.

The method may further comprise controlling and/or regulating operation of the at least one hearing device based on the determined amount of motion of the at least one hearing device in at least one of the calibrated spatial dimensions x, y, z of the at least one hearing device. For example, the detection of motion signals may be fed into automatic steering engines of the hearing device, enabling the context classification to steer audiological settings. The detection may be used to control audiological settings, e.g., directionality, noise reduction, transient noise reduction, target loss compensation, e.g. boost of the speech spectrum frequency area, compression, gain offsets such as brightness, etc. For example, a motion pattern related to an eating scenario may be used to increase the transient noise reduction in order to reduce the cutlery noise. A detection of a focused conversation without eating can result in increased compression, brightness, and target loss compensation for boosted speech intelligibility. The detection may be fed into the automatics of the hearing device, where the amount of beamforming and noise reduction may e.g. be increased to give the user more help to focus.

The method may comprise determining at least one motion pattern based on the amount of motion of the at least one hearing device in at least one of the calibrated spatial dimensions x, y, z of the at least one hearing device. A motion pattern may comprise at least one motion. Preferably, a motion pattern may include two or more movements measured in one, two or three axes. A motion pattern may take into account intensity, duration and/or direction of at least one motion and/or a sequence of at least two motions. A motion pattern may e.g. comprise a short nod of the user. In particular, a motion pattern may comprise a short nod to the front and/or to the side.

The method may further comprise comparing the at least one motion pattern with predetermined motion patterns. The method may comprise predefining at least one motion pattern of the at least one hearing device. The predetermined motion patterns may be stored in the at least one hearing device, in particular the memory of the at least one hearing device, and/or a connected mobile device. The at least one motion pattern may be configurable, e.g. defined by the user himself or herself. The at least one motion pattern may be programmed by a hearing care professional who provides e.g. a list of motion patterns, alternatively, or in addition to that, the user could program motion patterns personally, e.g. via an interactive session using a mobile device, e.g. a smartphone or tablet or other electronic device with a screen.

The method may further comprise controlling and/or regulating operation of the at least one hearing device based on the determined at least one motion pattern. The method may comprise assigning a predefined motion pattern to an operation of the hearing device. A sensor controller could be adapted to analyze signals from a sensor in order to recognize a motion pattern of the hearing device corresponding to the predefined motion pattern. The sensor controller could be part of a controller configured for controlling the operation of the processor or it could be separate.

In this context, "regulating" means that the actual value of a parameter is changed by suitable process action in the event of deviation from the desired set point so that the actual value approaches the set point and ideally reaches it. Because the drift from the set point is counteracted, the feedback is a negative feedback. In the case of "controlling", on the other hand, there is no feedback and consequently no closed-loop effect. Control is understood to be the influencing of the behavior of a system, whereby the system is brought into a different state by the control. The control or regulation can take place by influencing selected parameters, for example by reducing or increasing a value.

Determining the amount of motion of the at least one hearing device in at least one of the calibrated spatial dimensions x, y, z of the at least one hearing device may comprise determining that the head of the user is still if at least substantially no motion of the at least one hearing device is detected. One way to detect a focused conversation scenario may be to assess the amount of motion in the x-y-plane. If the user is having a focused conversation with a person in front of him or her, the amount of head turns will be limited, and thus the amount of motion in the x-y-plane will be limited. Nevertheless, also, a focused conversation may still involve head gestures such as nodding and head tilts, which can be detected as motion activity in the x-z- and y-z-planes.

Alternatively, or additionally, determining the amount of motion of the at least one hearing device in at least one of the calibrated spatial dimensions x, y, z of the at least one hearing device may comprise determining that the user is eating and/or nodding if the amount of motion in the x-z-plane dominates. In particular, when the x-y-z directions are calibrated via the rotation matrix R, eating and nodding may be reflected by motion in the x-z-plane.

Alternatively, or additionally, determining the amount of motion of the at least one hearing device in at least one of the calibrated spatial dimensions x, y, z of the at least one hearing device may comprise determining that the head of the user is turning if the amount of motion in the x-y-plane dominates. In particular, when the x-y-z directions are calibrated via the rotation matrix R, head turns may be reflected by motion in the x-y-plane.

Alternatively, or additionally, determining the amount of motion of the at least one hearing device in at least one of the calibrated spatial dimensions x, y, z of the at least one hearing device may comprise determining full body motion, in particular walking, running and/or jumping, of the user if the amount of motion on the z-axis dominates. In a scenario, where the user is running, walking, jumping or performing other physical full-body activities, e.g., during sports, dancing, and exercise, the user may benefit from having more peripheral auditory input, rendering a fuller picture of the sound scene to allow for orienting during motion. The full-body motion causes a strong motion activity along the z-axis. When the z-axis motion is above a certain threshold, a reduced amount of beamforming and noise reduction may be applied.

The signal processing method may comprise determining if the amount of motion of the at least one hearing device in at least one of the calibrated spatial dimensions x, y, z of the at least one hearing device is above or below a predetermined threshold amount within a predetermined time interval. Preferably, it may be determined if the amount of motion of the at least one hearing device in a plane of two of the calibrated spatial dimensions x, y, z, is above or below a predetermined threshold amount within a predetermined time interval. For example, when the motion activity in the x-y-plane is below a certain threshold amount, it may be an indication that the user is in a focused conversation. For example, a focused conversation may be identified if a maximum of four head turns is determined in one minute. When the motion activity in the x-y-plane is above a certain threshold amount, it may be an indication that the user is in a multi-user conversation.

The predetermined threshold may be the same or different for at least two of the calibrated spatial dimensions x, y, z. It is conceivable that the same or different thresholds may be determined for at least two axes.

The amount of beamforming and/or noise reduction may be decreased if the amount of motion on the z-axis and/or in the x-y-plane is above a predetermined threshold amount within the predetermined time interval. The amount motion on the z-axis being above a predetermined threshold amount may allow for identifying full body motion of a user. The amount motion in the x-y-plane being above a predetermined threshold amount may allow for determining that the user is in a multi-user conversation. It may thus be advantageous to adapt to the identified situation and decrease beamforming and/or noise reduction. The user may rather benefit from having more peripheral auditory input.

The amount of beamforming and/or noise reduction may be increased if the amount of motion in the x-y-plane is below a predetermined threshold amount within the predetermined time interval. The amount motion in the x-y-plane being below a predetermined threshold amount may allow for determining that the user is in a focused conversation. Thus, it may be advantageous to increase the amount of beamforming and/or noise reduction. It may also be advantageous to increase compression, brightness, and/or target loss compensation for boosted speech intelligibility when identifying that the user is in focused conversation, in particular without eating.

The method may further comprise detecting at least one eye gaze signal. In comparison to horizontal head motion, eye gaze is a more distinguishable signal for detecting left-right gaze compared to the left-right head orientation. Naturally, eye movement is faster than turning of the head. In a conversational setting, users use their eye gaze to interact with others. The switching of attention is a combination of both the eye gaze and the head rotation. For hearing device users, it is not only an extra effort, but also socially awkward when having to directly point the head towards the attended speaker among others in a conversation with more than one person. In cases where the listener may have targets of interest both towards the left side and towards the right side, the intended talker may be determined from the direction of the eye gaze, e.g. left, right, or front. This may e.g. be an important input in order to steer the intended target direction of a beam former.

The method may comprise determining the amount of eye gaze saccades within a predetermined time interval based on the detected eye gaze signal. An eye gaze signal may comprise at least one saccade and/or fixation. A saccade may allow for drawing conclusions about eye movement. In particular, a saccade may be a transition, preferably a fast transition. Saccades can be detected from eye gaze, which can be recorded as an artefact of an electrooculography (EarEOG). While e.g. eye gaze from an EarEOG is often polluted with some drift and thus, it is difficult to estimate absolute eye gaze, detecting saccades is robust to low frequency drift of an EarEOG signal.

A number of saccades may be determined for a given time frame. The number of saccades at a given timeframe may e.g. be used to distinguish if the user is in a focused or multi-user conversation mode. In a conversation, an increase in saccades in a given timeframe may indicate that the user is trying to engage in a conversation with more than one subject. In particular, lots of saccades may indicate the user being in a multi-user conversation.

The method may further comprise controlling and/or regulating operation of the at least one hearing device based on the determined amount of eye gaze saccades within the predetermined time interval. An inference of the user's intent may be provided through the detection of the eye gaze signal and e.g. used to adapt the directionality in the hearing device. A higher number of saccades may e.g. steer the hearing device as default DIR settings. Less beam former and an increased width of beam former may be applied. A lower number of saccades may be used to determine that the user is in a focused conversation and e.g. a higher directional gain may be applied. In particular, at least one threshold amount may be predetermined.

The detection of the eye gaze signal may be only performed if the amount of motion in the x-y-plane is below a predetermined threshold amount within the predetermined time interval. In particular, the determination of the amount of eye gaze saccades may be only performed if the amount of motion in the x-y-plane is below a predetermined threshold amount within the predetermined time interval. The method may e.g. comprise classifying if the user is in conversation settings or engaged in vigorous activities. For example, if the amount of motion is beyond a predefined threshold amount, the user is hence in a non-conversation setting and it may thus be determined that no help in terms of directionality is required. However, if it is classified that the user is in a conversation setting, then further information of eye gaze may be used to infer the user's intent. For example, the amount of motion in the x-y-plane being below a predetermined threshold amount may suggest that the user is in a one to one conversation. Consideration of eye movement may provide certainty in this regard. No sharp eye movement is expected in a one to one conversation. Thus, if the amount of saccades is below a predetermined threshold, e.g. less than four saccades in a minute, for example, directionality may be increased.

Detecting at least one motion signal of at least one hearing device may comprise detecting at least a first motion signal of a first hearing device of a binaural hearing system, and detecting at least a second motion signal of a second hearing device of a binaural hearing system, wherein the method may further comprise summing or subtracting the first and the second motion signal of the first and the second hearing devices, and determining the absolute amount of motion of the first and the second hearing devices in at least one of the calibrated spatial dimensions x, y, z of at least one hearing devices. Binaural information may be implemented as a sum or subtraction of the motion signals in the pre-processing. Detecting a first and a second motion signal of a first and a second hearing device and summing or subtracting the first and the second motion signal of the first and the second hearing devices may allow for more reliably identifying scenarios the user of a binaural hearing system is confronted with. Binaural information from two hearing devices worn on each side of the head of the user may be used to increase certainty of the motion detection.

The hearing device may comprise at least one sensor for detecting at least one motion signal of the hearing device. In particular, the hearing device may comprise at least one sensor for detecting at least one movement and/or acceleration of the hearing device. The sensor may provide information about the movement and/or acceleration of the hearing device. In particular, the sensor may detect if the hearing device user is moving or turning his or her head. The sensor may be any suitable type of sensor capable of detecting movement and/or acceleration of the hearing device. The sensor may be an integrated part of the hearing device or be attached to the hearing device in any suitable way.

It may be beneficial that the sensor is or comprises an accelerometer. An accelerometer is a sensor that detects its own acceleration. This is usually done by determining the inertial force acting on a test mass. In this way, it can be determined, for example, whether an increase or decrease in speed is taking place. An accelerometer may detect if the user is tapping on the hearing device, in particular a hearing device housing, which may be done inconspicuously.

The accelerometer may be an accelerometer configured to measure linear acceleration in one, two or three directions. An accelerometer may be a component designed with specific x, y, and z-axis relative to its housing. Designing the sensor into a hearing device can be done in ways where the axis of orientation of the sensor directly matches the axis of orientation of the hearing device, e.g. an axis defined by a 'direction of microphones', when it is placed on a person's ear. In this way no conversion of the accelerometer data is needed to achieve correct motion data, i.e. moving forward may e.g. correspond directly to the positive direction of the accelerometers x-axis. Alternatively, a fixed transformation of the data can be carried out by use of fixed spatial rotation of the axis, based on previously calculated placement of the sensors in the user situation relative to a characteristic direction of the hearing device, e.g. a direction defined by the housing of the hearing device, e.g. an outer edge of the housing. But to allow user individualization as well as allowing for free orientation of the sensors, it is advantageous to detect the sensors' placement relative to the head of the user by detecting motion data for each hearing device and to compare such data between the hearing devices. A spatial rotation matrix may be determined from the combined data, and this can be used for spatial transformation of the sensors' axis to the user's current head orientation. The transformation should preferably be continuously adapting to the user's head movements.

The hearing device may comprise at least two electrodes for detecting at least one eye gaze signal. The voltage may be determined between the at least two sensors for determining eye movement. For example, in the case of an ITE hearing aid, one or more electrodes, in particular EOG sensors, may be arranged on the outside of the hearing aid for measuring the difference between the EOG sensors and thus eye movement. In particular, the eye gaze signal may be determined binaurally.

Providing both, a sensor for detecting motion signals, and electrodes for detecting eye gaze signals, may allow for solving ambiguities in the user's intent. For example, an accelerometer is particularly useful for distinguishing focused or sitting still and vigorous activity. However, it may be difficult to detect the head movement using an accelerometer only. Eye gaze signals from an EarEOG are often polluted with some drift. Hence it is difficult to estimate an absolute eye gaze. However, detecting only the saccade is robust to low frequency drift of the EarEOG signal. By fusing both sensors, the user's intent may be inferred with a higher degree of confidence and hence an optimal health demanded by the listener's setting may be provided.

The hearing device may comprise at least one low-pass filter. Preferably, the hearing device may comprise at least one 1st order IIR filter with different attack and release time. Low-pass filtering allows for reduced computation and memory load. Low-pass filtering with a 1st order IIR filter with different attack and release times offers the necessary capabilities for fine-tuning detection of relevant head motions.

In an embodiment, the hearing device may further comprise a head tilt detector. For example, the method may comprise detecting and processing at least one head tilt signal.

In an embodiment, the hearing device may further comprise at least one acoustic detector and/or own-voice detector. For example, the method may comprise detecting and processing at least one acoustic signal, e.g. sound environment characteristics such as noise level and signal-to-noise ratio.

In an embodiment, the hearing device may comprise at least one EEG (Electroencephalography), PPG (Photoplethysmography), and/or NIRS (Near Infrared Spectroscopy) detector, rendering detectors that can supply information on e.g. eye gaze patterns and directions, attention, and fatigue.

The disclosure of a method step is to be understood to also disclose the respective means for performing the method step. Likewise, the disclosure of means for performing a method step is to be understood to also disclose the respective method step.

Further configurations and advantages of the invention will be explained in the following detailed description of some exemplary embodiments of the present invention in conjunction with the drawings.

## BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

Fig. 1a, 1b   illustrate a hearing device user being in a focused conversation or a multi-user conversation, respectively;

Fig. 2   schematically illustrates an embodiment of a signal processing method according to the first aspect;

Fig. 3a, 3b   schematically illustrates calibrating of the spatial directions x', y', z' via a rotation matrix R;

Fig. 4   schematically illustrates different motions in different axes of the x-y-z-plane;

Fig. 5   graphically represents detected head motion during conversation exhibited in all three spatial dimensions x, y, z;

Fig. 6   graphically illustrates an eye gaze signal captured from an EarEOG;

Fig. 7   schematically illustrates a flow chart of a signal processing method according to the first aspect; and

Fig. 8   schematically illustrates a flow chart of a method with a simplified eye gaze saccade detector from an EarEOG.

## DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

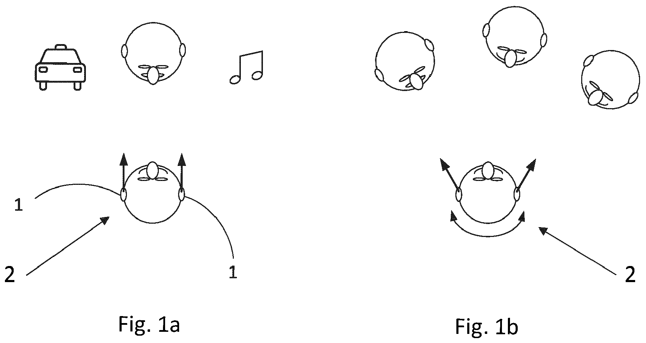

Fig. 1a and Fig. 1b illustrate the problem to apply the right optimum amount of help, e.g. the optimal amount of noise reduction, depending on the situation a user 2 of a hearing device 1 might be confronted with. If the user 2 is in a focused conversation, as shown in Fig. 1a, a high help setting is best suited for his or her intend. If the user 2 is in a dynamic multi-user conversation, as shown in Fig. 1b, his or her intend is better met by providing a full sound picture, i.e., low help.

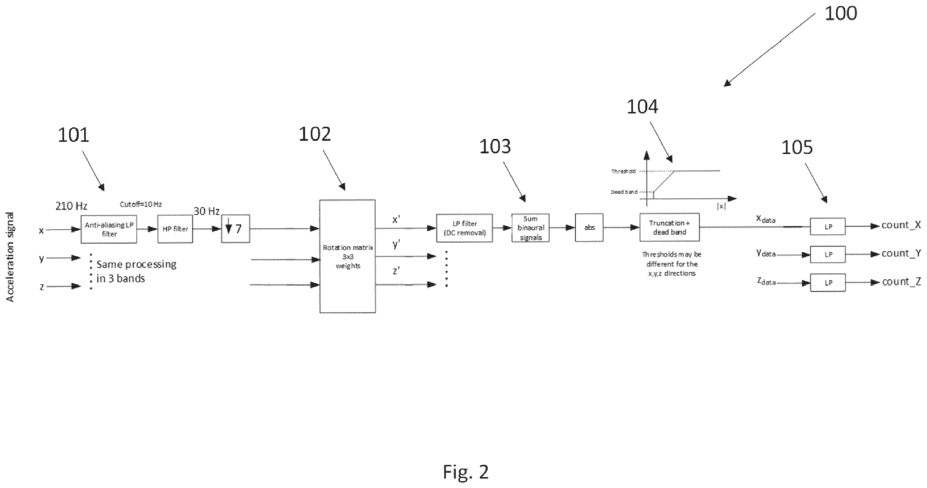

In Fig. 2, an embodiment of a signal processing method according to the first aspect is shown. The signal processing method 100 comprises processing in three individual bands representing the three spatial dimensions. In particular, the method 100 comprises processing an accelerometer signal of a hearing device 1 in three individual channels representing three spatial dimensions x, y, z of the hearing device 1, step 101.

The method 100 further comprises calibrating the orientation of the three spatial dimensions x', y', z' of the hearing device 1 to a standardized orientation of the head of a user wearing the hearing device 1 by using a rotation matrix R calibrating the spatial dimensions to the user's head orientation (up/down, left/right, front/back) according to the placement angle $\theta$, step 102.

The method 100 further comprises a binaural summation of the acceleration signals, step 103. The sum can be placed before the abs operator (as indicated), but can also be placed directly after the abs operator. The binaural coordination of the acceleration signals is a consequence of the fact that the two acceleration signals are highly coordinated due to being mounted along the firm head scull. The binaural information extraction can be implemented as a sum or subtraction of the acceleration signals in the pre-processing block. The motion detection algorithm is subject to optimization with respect to different versions of the binaural summation, i.e., placing the binaural summation block before or after the abs operator and processing the sum or the difference of the binaural signals. This is particularly relevant for subtle head gestures, which are a natural part of body language during conversation.

Moreover, 3-dimensional truncation and dead band thresholds are comprised by the method 100, step 104, and also low-pass filtering of the count estimate for reduced computational load, step 105.

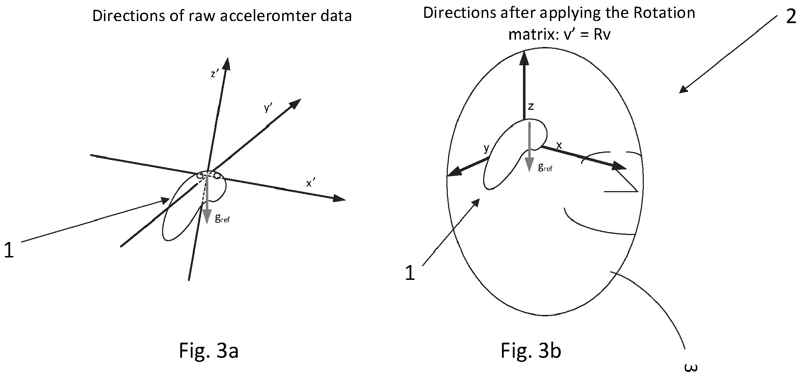

In Fig. 3a and 3b, calibrating of the spatial directions x', y', z' via a rotation matrix R is shown. In Fig. 3a, the mounting of a sensor (not shown), in particular an accelerometer, inside a hearing aid may be rotated relative to the directions of interest for the purpose of detecting head motion patterns. In Fig. 3b, a head 3 of a user 2 is shown, wherein the directions of the three spatial dimensions x', y', z' are aligned into a normalized orientation, represented by an up/down direction (z), side direction (y), and front/back direction (x). This is done by means of the rotation matrix R. By applying a standard linear algebra operation in terms of a rotation matrix, the original recorded acceleration signal is projected onto a new vector base, representing the illustrated normalized orientation. The rotation matrix R is dependent on the placement angle $\theta$ of the hearing device and can be derived for an individual user 2 by measuring the static acceleration caused by gravity when the hearing device is placed on the ear and when it is lying flat on the side.

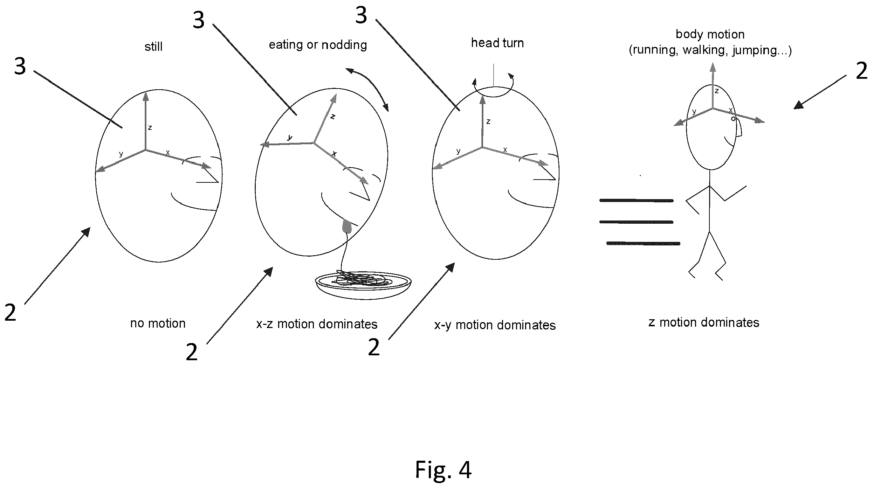

In Fig. 4, different motions are reflected in different axes of the x-y-z-plane. When the directions x, y, z are calibrated via the rotation matrix R, eating and nodding is reflected by motion in the x-z-plane, head turns in the x-y-plane, and full body motion (walking, running, jumping, etc.) on the z-axis. This ability to discriminate the subtle head motions is unique to the acceleration signal recorded from a hearing device 1 mounted close to the skull, unlike e.g. the signal from an accelerometer mounted on the wrist or in a smart phone.

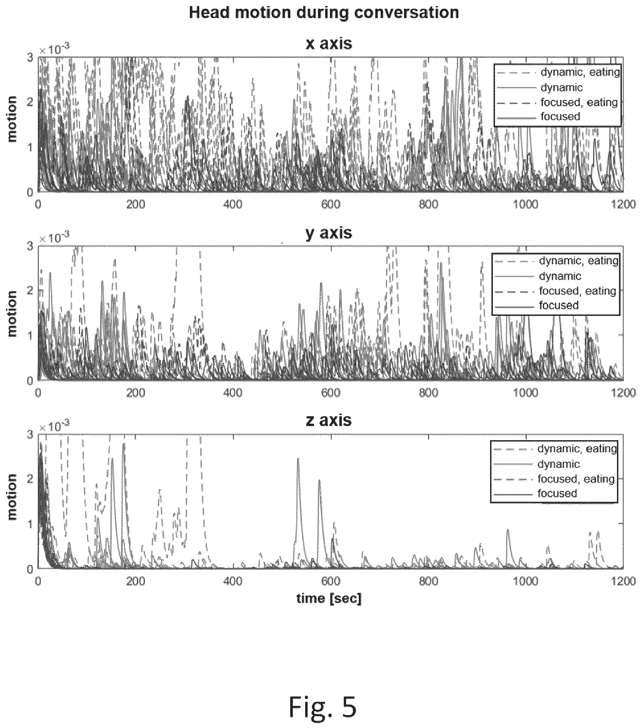

In Fig. 5, detected head motion during conversation exhibited in all three spatial dimensions x, y, z is shown. The dynamic conversations can be discriminated from the focused conversations by assessing the amount of activity in the x-y-plane: The dynamic conversations are related to an increased number of head turns, whereas both dynamic and focused conversations are related to motion in the x-z- and y-z-plane induced by natural head gestures such as nodding and head tilts.

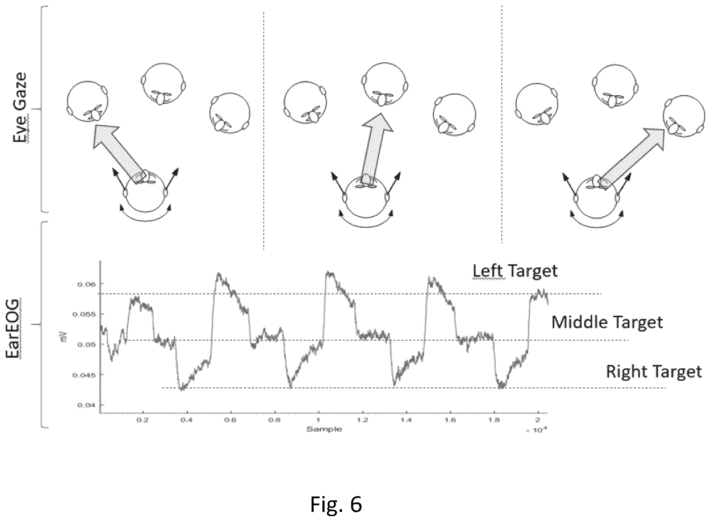

Fig. 6 graphically illustrates an eye gaze signal captured from an EarEOG. The three levels as characterized by the dashed lines correspond to the eye gaze at three targets, located at +30, 0 and -30 degrees. A change in target is reflected as an abrupt change in the magnitude level, known as saccade. In comparison to a horizontal head motion, eye gaze is a more distinguishable signal for detecting left-right gaze compared to the left-right head orientation. In a conversation, an increase in saccades in a given timeframe would generally mean that the user is trying to engage in a conversation with more than one subject.

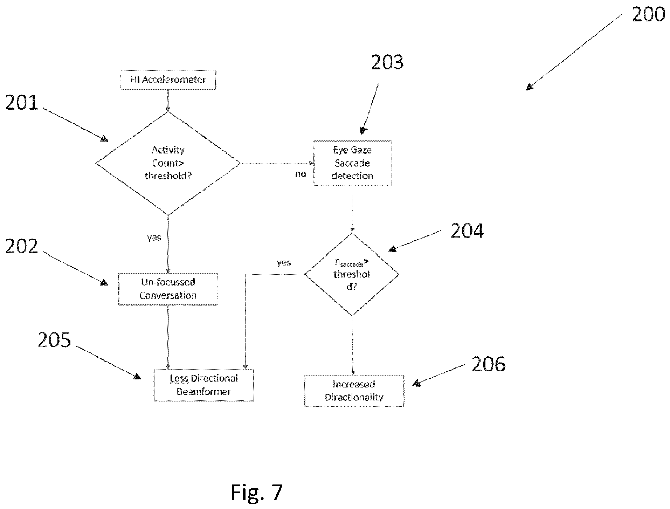

Fig. 7 schematically illustrates a flow chart of a signal processing method according to the first aspect. Here, accelerometer and eye gaze signals are used to infer the listening intent of a hearing device user and hence steer the DIR system is considered in the signal processing method 200. The accelerometer-based activity estimation classifies if the user is in conversation settings or engaged in vigorous activities, step 201. If the motion counter estimates the activity counts beyond a predefined threshold, the user is hence in a non-focused conversation setting, step 202, and therefore he or she does not require help in terms of directionality. If the accelerometer-based activity monitoring classifies the user is in a conversation setting, step 203, then further information of eye gaze would be used to infer the user's intent.

The number of detected saccades at a given timeframe is used to distinguish if the user is in a focused or multi-user conversation mode, step 204. In cases where the listener may have targets of interest both towards the left side and towards the right side, the intended talker may be determined from the direction of the eye gaze (left or right, or front). This may be an important input in order to steer the intended target direction of a beam former. A higher number of saccades would steer the hearing device as default DIR settings, step 205. No or a low number of saccades would mean that user is in a focused conversation and a higher directional gain would be applied, step 206.

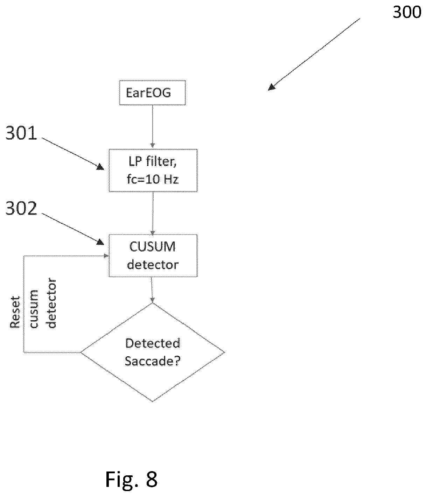

In Fig. 8, a method 300 with a simplified eye gaze saccade detector from an EarEOG is shown. Saccades can be detected from eye gaze, which can be recorded as an artefact of an EarEOG. The saccade is a low frequency phenomenon, hence filtered at low sampling rate.

The EarEOG signal can be low-pass filtered, step 301, and then passed through a detector of abrupt change. There are many different ways to detect saccade. For example, a cumulative-sum CUSUM detector may be used, step 302.

One important consideration for processing an EarEOG signal for eye gaze is to suppress the noise during fixation and fast adaptation when there is a saccade with the same filter. This is contradictory but achievable if the filter is adapted accordingly by utilizing the knowledge of the EarEOG signal to detect the saccade.

One way is to increase the bandwidth of the filter, e.g. an extended Kalman filter or a level estimator with attack release time, to achieve fast adaptation in an event of a saccade in the EarEOG. However, in order not to trigger a saccade detection in the temporary changes of an EarEOG level, which may resemble a saccade, a cumulative sum of test statistic can be formed as,

$$g_{k+1} = \max\left(g_k + x_k - v, 0\right)$$

Here, $x_k$ is the absolute deviation of EarEOG, y from the mean in a sliding window of L.

$$x_k = \left|\frac{1}{L}\sum_{i=k-L+1}^{k} y_i - y_k\right|$$

Here, $v$ is a positive constant suppressing the otherwise unbounded growth of the sequence $g_k$ as it is the sum of positive random numbers. When $g_k$ is larger than a threshold, then an alarm is set, meaning the saccade is detected. Then the detector can be disabled for some time and $g_k$ is reset to zero for next saccade detection.

The fusion of both accelerometer and EarEOG may solve ambiguities in the user's intent we would otherwise struggle with if we only had one sensor:

- An accelerometer is good at distinguishing focused/sitting still and vigorous activity. However, it may be difficult to detect the head movement using the accelerometer only.
- The eye gaze from EarEOG is often polluted with some drift. Hence it is difficult to estimate absolute eye gaze. However, detecting only the saccade is robust to low frequency drift of the EarEOG signal.
- Fusing both sensors, we may be able to infer the user's intent with higher degree of confidence and hence we can provide optimal health demanded by the listener's setting.

It is intended that the structural features of the devices described above, either in the detailed description and/or in the claims, may be combined with steps of the method, when appropriately substituted by a corresponding process.

As used, the singular forms "a", "an", and "the" are intended to include the plural forms as well (i.e. to have the meaning "at least one"), unless expressly stated otherwise. It will be further understood that the terms "includes", "comprises", "including", and/or "comprising", when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure, or characteristic described in connection with the embodiment is included in at least one embodiment of the disclosure. Furthermore, the particular features, structures, or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more". Unless specifically stated otherwise, the term "some" refers to one or more.

Accordingly, the scope should be judged in terms of the claims that follow.

**Claims**

1. A signal processing method, in particular performed by at least one hearing device, the signal processing method comprising:

   - detecting at least one motion signal of at least one hearing device (1);
   - processing the at least one motion signal of the at least one hearing device (1) in three individual channels representing three spatial dimensions (x', y', z') of the at least one hearing device (1);

- calibrating the orientation of the three spatial dimensions (x', y', z') of the at least one hearing device (1) to a standardized orientation of the head (3) of the user (2) wearing the at least one hearing device (1); and

- determining the amount of motion of the at least one hearing device (1) in at least one of the calibrated orientations of the three spatial dimensions (x, y, z) of the at least one hearing device (1).

2. The signal processing method according to claim 1, wherein calibrating the orientation of the three spatial dimensions (x', y', z') of the at least one hearing device (1) to the standardized orientation of the head (3) of the user (2) wearing the at least one hearing device (1) comprises:

- calibrating the directions of the three spatial dimensions (x', y', z') such that each calibrated spatial dimension (x, y, z) corresponds to a standardized direction (X, Y, Z) relative to the standardized orientation of the head (3) of the user (2).

3. The signal processing method according to claim 1 or 2, wherein calibrating the orientation of the three spatial dimensions (x', y', z') of the at least one hearing device (1) to the standardized orientation of the head (3) of the user (2) wearing the at least one hearing device (1) comprises:

- determining a rotation matrix (R) based on a placement angle ($\theta$) of the hearing device (1); and

- applying the rotation matrix (R) to the three spatial dimensions (x', y', z') in order to obtain the calibrated spatial dimensions (x, y, z).

4. The signal processing method according to any one of claims 1 to 3, wherein the method further comprises:

- low-pass filtering of the amount of motion of the at least one hearing device (1) in at least one of the calibrated spatial dimensions (x, y, z).

5. The signal processing method according to any one of claims 1 to 4, wherein the method further comprises:

- controlling and/or regulating operation of the at least one hearing device (1) based on the determined amount of motion of the at least one hearing device (1) in at least one of the calibrated spatial dimensions (x, y, z) of the at least one hearing device (1).

6. The signal processing method according to any one of claims 1 to 5, wherein the method further comprises:

- determining at least one motion pattern based on the amount of motion of the at least one hearing device (1) in at least one of the calibrated spatial dimensions (x, y, z) of the at least one hearing device (1);

- comparing the at least one motion pattern with predetermined motion patterns, in particular stored in the memory of the at least one hearing device (1); and

- controlling and/or regulating operation of the at least one hearing device (1) based on the determined at least one motion pattern.

7. The signal processing method according to any one of claims 1 to 6, wherein determining the amount of motion of the at least one hearing device (1) in at least one of the calibrated spatial dimensions (x, y, z) of the at least one hearing device (1) comprises:

- determining that the head (3) of the user (2) is still if at least substantially no motion of the at least one hearing device (1) is detected;

- determining that the user (2) is eating and/or nodding if the amount of motion in the x-z-plane dominates;

- determining that the head (3) of the user (2) is turning if the amount of motion in the x-y-plane dominates; and/or

- determining full body motion, in particular walking, running and/or jumping, of the user (2) if the amount of motion on the z-axis dominates.

8. The signal processing method according to any one of claims 1 to 7, wherein the method further comprises:

- determining if the amount of motion of the at least one hearing device (1) in at least one of the calibrated spatial dimensions (x, y, z), preferably in a plane of two of the calibrated spatial dimensions (x, y, z), of the at least one hearing device (1) is above or below a predetermined threshold amount within a predetermined time interval.

9. The signal processing method according to claim 8, wherein the predetermined threshold is the same or different for at least two of the calibrated spatial dimensions (x, y, z).

10. The signal processing method according to claim 8 or 9, wherein beamforming and/or noise reduction is decreased if the amount of motion on the z-axis and/or in the x-y-plane is above a predetermined threshold amount within the predetermined time interval.

11. The signal processing method according to any one of claims 8 to 10, wherein the amount of beamforming and/or noise reduction is increased if the amount of motion in the x-y-plane is below a predetermined threshold amount within the predetermined time interval.

12. The signal processing method according to any one of claims 1 to 11, wherein the method further comprises:

    - detecting at least one eye gaze signal;
    - determining the amount of eye gaze saccades within a predetermined time interval based on the detected eye gaze signal; and
    - controlling and/or regulating operation of the at least one hearing device (1) based on the determined amount of eye gaze saccades within the predetermined time interval.

13. The signal processing method according to claim 12, wherein the detection of the eye gaze signal, in particular the determination of the amount of eye gaze saccades, is only performed if the amount of motion in the x-y-plane is below a predetermined threshold amount within the predetermined time interval.

14. The signal processing method according to any one of claims 1 to 13, wherein detecting at least one motion signal of at least one hearing device (1) comprises:

    - detecting at least a first motion signal of a first hearing device (1) of a binaural hearing system; and
    - detecting at least a second motion signal of a second hearing device (1) of a binaural hearing system;

    wherein the method further comprises:

    - summing or subtracting the first and the second motion signal of the first and the second hearing devices (1); and
    - determining the absolute amount of motion of the first and the second hearing devices (1) in at least one of the calibrated spatial dimensions (x, y, z) of at least one hearing devices (1).

15. A hearing device (1), in particular a hearing aid, the hearing device (1) being configured to and/or comprising at least one means for performing a method according to one of claims 1 to 14.

16. Hearing device (1) according to claim 15, wherein the hearing device (1) comprises at least one sensor for detecting at least one motion signal, in particular at least one movement and/or acceleration, of the hearing device (1).

17. Hearing device 1 according to claim 15 or 16, wherein the hearing device (1) comprises at least two electrodes (6) for detecting at least one eye gaze signal.

18. Hearing device 1 according to any one of the claims 15 to 17, wherein the hearing device (1) comprises at least one low-pass filter, preferably at least one 1st order IIR filter with different attack and release time.

19. A binaural hearing system comprising a first and a second hearing device (1), in particular a first and a second hearing aid, the first and the second hearing device (1) being configured to and/or comprising at least one means for performing a method according to one of claims 1 to 14, wherein the binaural hearing system is configured to determine an absolute amount of motion of the first and the second hearing devices (1) in at least one of spatial dimensions (x, y, z) of at least one of the hearing device (1) based on the detected motion signal of the first and second hearing device (1).

20. A computer program comprising instructions which, when executed by a device, preferably a hearing device according to any one of the claims 15 to 19, cause the device to perform the signal processing method according to any one of the claims 1 to 14.

Fig. 1b

Fig. 1a

Fig. 2

Directions of raw acceleromter data

Directions after applying the Rotation matrix: v' = Rv

Fig. 3a

Fig. 3b

Fig. 4

Fig. 5

Fig. 6

200

203

201

HI Accelerometer

Activity
Count>
threshold?

Eye Gaze
Saccade
detection

no

204

$n_{saccade}>$
threshol
d?

yes

202

yes

Un-focussed
Conversation

205

206

Less Directional
Beamformer

Increased
Directionality

Fig. 7

300

EarEOG

301

LP filter,
fc=10 Hz

302

CUSUM
detector

Reset cusum detector

Detected
Saccade?

Fig. 8

Europäisches Patentamt

European Patent Office

Office européen des brevets

# EUROPEAN SEARCH REPORT

Application Number

EP 24 17 2060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/222917 A1 (PERRY DANIEL J [US] ET AL) 18 July 2019 (2019-07-18) | 1-9, 14-16, 18-20 | INV. H04R1/10 |
| Y | * paragraphs [0017] - [0042]; figures 1-6 | 12,13,17 | ADD. |
| A | * | 10,11 | H04R25/00 |
| X | EP 3 684 079 A1 (SONOVA AG [CH]) 22 July 2020 (2020-07-22) | 1-11, 14-16, 18-20 | |
| Y | * paragraphs [0029] - [0038], [0050] - [0053], [0064]; figures 1,13 * | 12,13,17 | |
| Y | WO 2022/108977 A1 (BOSE CORP [US]) 27 May 2022 (2022-05-27) | 12,13,17 | |
| A | * page 5, lines 21-27 * | 1-11, 14-16, 18-20 | |
| A | EP 3 291 573 A1 (APPLE INC [US]) 7 March 2018 (2018-03-07) * paragraphs [0012] - [0041] * | 1-20 | |

TECHNICAL FIELDS SEARCHED (IPC)

H04R

The present search report has been drawn up for all claims

| Place of search | Date of completion of the search | Examiner |
|---|---|---|
| Munich | 10 September 2024 | Fruhmann, Markus |

EPO FORM 1503 03.82 (P04C01)

## ANNEX TO THE EUROPEAN SEARCH REPORT
## ON EUROPEAN PATENT APPLICATION NO.

EP 24 17 2060

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | | Publication date |
|---|---|---|---|---|
| US 2019222917 A1 | 18-07-2019 | US | 2018288516 A1 | 04-10-2018 |
| | | US | 2019222917 A1 | 18-07-2019 |
| | | US | 2020304901 A1 | 24-09-2020 |
| | | US | 2022053258 A1 | 17-02-2022 |
| | | US | 2023143987 A1 | 11-05-2023 |
| EP 3684079 A1 | 22-07-2020 | DK | 3684079 T3 | 15-04-2024 |
| | | EP | 3684079 A1 | 22-07-2020 |
| WO 2022108977 A1 | 27-05-2022 | EP | 4248261 A1 | 27-09-2023 |
| | | US | 2024004605 A1 | 04-01-2024 |
| | | WO | 2022108977 A1 | 27-05-2022 |
| EP 3291573 A1 | 07-03-2018 | AU | 2017216591 A1 | 22-03-2018 |
| | | CN | 107801112 A | 13-03-2018 |
| | | CN | 207410484 U | 25-05-2018 |
| | | EP | 3291573 A1 | 07-03-2018 |
| | | EP | 3998780 A1 | 18-05-2022 |
| | | HK | 1251108 A1 | 18-01-2019 |
| | | JP | 6636485 B2 | 29-01-2020 |
| | | JP | 2018042241 A | 15-03-2018 |
| | | KR | 20180027344 A | 14-03-2018 |
| | | KR | 20190035654 A | 03-04-2019 |
| | | TW | 201813414 A | 01-04-2018 |
| | | US | 2018070166 A1 | 08-03-2018 |
| | | US | 2019342651 A1 | 07-11-2019 |

EPO FORM P0459

For more details about this annex : see Official Journal of the European Patent Office, No. 12/82

**EP 4 456 559 A1**

**REFERENCES CITED IN THE DESCRIPTION**

**Non-patent literature cited in the description**

- **M. D. SHUSTER ; S. D. OH.** *Journal of Guidance, Control, and Dynamics*